# EUROPEAN PATENT APPLICATION

(11) **EP 3 854 836 A1**
(43) Date of publication of application: **28.07.2021**
(21) Application number: 19862753.1
(22) Date of filing: 20.09.2019
(51) Int. Cl.: C08J 5/06, B29B 15/08, D01F 9/12, D06M 15/19

(54) **REINFORCING FIBER BUNDLE, REINFORCING FIBER OPEN FABRIC, AND FIBER-REINFORCED COMPOSITE, AND METHOD FOR MANUFACTURING SAME**

(30) Priority: 21.09.2018 JP 2018177926
(71) Applicant: SEKISUI CHEMICAL CO., LTD., Osaka-shi Osaka 530-8565 (JP)
(72) Inventor: NAKAMURA Masanori, Kyoto-shi, Kyoto 601-8105 (JP); INAMORI Toshio, Kyoto-shi, Kyoto 601-8105 (JP)
(74) Representative: Ter Meer Steinmeister & Partner
(86) International application number: PCT/JP2019/037075
(87) International publication number: WO 2020/059867

(57) **Abstract**

To provide an opened carbon fibre bundle having a good fibre-opening state and excellent resin impregnation properties. An opened carbon fibre bundle comprising a carbon fibre bundle comprising a plurality of carbon fibres and coated particles arranged between the carbon fibres, wherein the coated particles comprise core particles and a synthetic resin coating that covers at least a part of the surface of the core particles, and the core particles are integrally bonded to the carbon fibre surface via the synthetic resin coating.

## Description

### CROSS-REFERENCE TO RELATED APPLICATIONS

The present application claims priority based on Japanese Patent Application No. 2018-177926, filed on September 21, 2018, the entire disclosure of which is incorporated by reference to form a part of the disclosure of the present specification.

### BACKGROUND OF THE INVENTION

### Field of the Invention

The present invention relates to an opened carbon fibre bundle using carbon fibres as reinforcing fibres; a fibre reinforced composite material containing the opened carbon fibre bundle; and a method for manufacturing the opened carbon fibre bundle.

### Background Art

Since a fibre reinforced composite material in which a matrix resin is reinforced with reinforcing fibres such as carbon fibres is of light weight while having excellent strength, rigidity, and dimensional stability, etc., it is widely used in various fields such as office equipment, automobiles, aircrafts, vehicles, computers such as housings of IC trays and laptops, water stops, and windmill blades, and its demand is increasing year by year.

Carbon fibres used in the fibre reinforced composite material are different from the matrix resin in chemical composition and molecular structure, and since compatibility with the matrix resin is low, adhesion of the matrix resin to the carbon fibres is low and thus impregnation of the matrix resin is low.

A fibre reinforced composite material using a thermoplastic resin as the matrix resin is obtained by molding compound pellets via various methods such as injection molding, injection compression molding, extrusion molding, and press molding.

In these molding methods, the reinforcing fibres are often used in the form of a fibre bundle. When the reinforced fibres are used in the form of a fibre bundle, opening state of the fibre bundle greatly affects the mechanical strength properties of the fibre reinforced composite material

For example, a general method used when manufacturing the fibre-reinforced composite material using a thermoplastic resin as the matrix resin, is a method by pressurizing and heating a sheet made of a thermoplastic resin and the reinforcing fibre bundle. It is known that at this time, when the reinforcing fibres constituting the reinforcing fibre bundle are not sufficiently opened, the resin will not be sufficiently impregnated between the carbon fibres, resulting in reduction of the mechanical strength of the fibre reinforced composite material.

Therefore, various attempts have been made to improve the compatibility between the carbon fibres and the matrix resin and to improve the impregnation of the thermoplastic resin by widening the interval between the carbon fibres. For example, Patent Documents 1 and 2 disclose attaching a sizing agent comprising synthetic resin particles to the fibre surface of the carbon fibre bundle. Patent Document 3 discloses that a carbon fibre is impregnated in a monomer solution of a naphthoxazine resin and then heated so that a spacer is formed on the surface of the carbon fibre. Further, Patent Document 4 discloses that attaching inorganic particles such as oxidized titanium particles and montmorillonite particles and carbonized particles to the carbon fibre surface makes it possible to improve impregnation properties of the matrix resin.

### [Prior Art Documents]

Patent Document 1: JP 2013-177705 A
Patent Document 2: JP 2014-122439 A
Patent Document 3: JP 2014-162116 A
Patent Document 4: JP 2018-58938 A

### SUMMARY OF THE INVENTION

### [Problems to be Solved by the Invention]

However, the carbon fibres disclosed in Patent Documents 1 and 2 to which synthetic resin particles are attached to the surface have the problem that when synthetic resin particles and the fibres are not attached sufficiently when a thermoplastic resin sheet and the reinforced fibre bundle are pressurized while being heated, the synthetic resin particles slide slip and fall outside the fibre bundle, and thus the synthetic resin particles cannot be retained in between the fibres, or the problem that the synthetic resin particles themselves break or melt by the pressure and temperature. Accordingly, although the carbon fibres were opened, it was difficult to maintain the opened state of the fibres sufficiently, and there was the case in which the thermoplastic resin cannot be sufficiently impregnated in between the carbon fibres.

On the other hand, as for the carbon fibre composite material described in Patent Document 3, it is desirable to enlarge the size of spacer particles so that a certain gap is formed between the fibres, in order to carry out homogenous resin impregnation while increasing the impregnation amount of the resin by opening the fibres of the fibre bundle. However, according to the method in Patent Document 3, in order to form the spacer particles by a naphthoxiazine resin, there is a need for a long period of heating for polymer reaction of the naphthoxiazine resin, and thus the productivity per hour was deemed to be insufficient.

Further, in the carbon fibre composite material described in Patent Document 4, it is disclosed that inorganic particles or carbonized particles are attached in between the carbon fibres; however, as in the above-described Patent Documents 1 and 2, there has been a problem that when a resin is impregnated between the carbon fibres under pressure, the inorganic particles or carbonized particles detach from the fibre surface and fall out of the carbon fibre bundle since the inorganic particles or the carbonized particles are only attached to the surface of the fibres.

The present invention has been made in view of the above-described problems, and the object of the present invention is to provide an opened carbon fibre bundle having good fibre-opening state and excellent resin impregnation properties. Another object of the present invention is to provide a method for manufacturing the opened carbon fibre bundle.

### [Means for Solving Problems]

As a result of intensive studies, the present inventors have found that the above problem can be solved by using core-shell type particles, in which the core particles are coated with a synthetic resin, as spacer particles for opening a carbon fibre bundle to produce a carbon fibre bundle in which the core particles are integrally bonded to the carbon fibre surface via a synthetic resin corresponding to the shell of the core-shell type particles, and have completed the following invention. The present invention provides the following [1] to [10].
[1] An opened carbon fibre bundle comprising a carbon fibre bundle comprising a plurality of carbon fibres and coated particles arranged between the carbon fibres, wherein
   the coated particles comprise core particles and a synthetic resin coating that covers at least a part of the surface of the core particles, and
   the core particles are integrally bonded to the carbon fibre surface via the synthetic resin coating.
[2] The opened carbon fibre bundle according to [1], wherein
   the core particles comprise at least one selected from the group consisting of carbon particles, silica particles, alumina particles, titanium oxide particles, calcium carbonate particles, talc particles, and divinylbenzene resin particles.
[3] The opened carbon fibre bundle according to [1] or [2], wherein
   the synthetic resin comprises at least one curable resin selected from the group consisting of epoxy resins, urethane resins, silicone resins, phenol resins, and vinyl ester resins.
[4] The opened carbon fibre bundle according to any one of [1] to [3], wherein
   at least one of the coated particles is bonded to two or more carbon fibres.
[5] The opened carbon fibre bundle according to any one of [1] to [4], wherein
   the average particle diameter of the core particles is 1 to 25 µm.
[6] A fibre reinforced composite material comprising the opened carbon fibre bundle according to any one of [1] to [5] and a matrix resin impregnated in the opened carbon fibre bundle.
[7] The fibre reinforced composite material according to [6], wherein
   the matrix resin is a thermoplastic resin.
[8] A method for manufacturing an opened carbon fibre bundle, comprising the steps of:
   attaching an uncured curable resin to core particles and covering at least a part of the surface of the core particles with the uncured curable resin;
   bringing the core particles coated with the uncured curable resin into contact with a carbon fibre bundle comprising a plurality of carbon fibres to attach the core particles to the surface of the carbon fibres via the uncured curable resin; and
   curing the uncured curable resin to form the coated particles so that the core particles are integrally bonded to the carbon fibre surface via the curable resin.
[9] The method according to [8], wherein
   the curing of the curable resin is performed by at least one selected from the group consisting of room temperature curing, heat curing, and active energy ray curing.
[10] The method according to [8] or [9], wherein
   the curable resin is a two-part curable resin comprising a main agent and a curing agent.

### Effect of the Invention

According to the present invention, it is possible to provide an opened carbon fibre bundle which has good fibre-opening state and excellent resin impregnation properties. In addition, it is possible to produce with high productivity the opened carbon fibre bundle having good fibre-opening state and excellent resin impregnation properties.

### Brief Description of Drawings

FIG. 1 is a schematic cross-sectional view of an opened carbon fibre bundle according to one embodiment of the present invention.
FIG. 2 is a schematic cross-sectional view of an opened carbon fibre bundle according to another embodiment of the present invention.
FIG. 3 is a schematic cross-sectional view of an opened carbon fibre bundle according to another embodiment of the present invention.
FIG. 4 shows an observation image of the surface of the opened carbon fibre bundle in Example 1B.
FIG. 5 shows an observation image of another position of the surface of the opened carbon fibre bundle in Example 1B.

### DETAILED DESCRIPTION OF THE INVENTION

Hereinafter, one example of a preferable embodiment for carrying out the present invention will be described. However, the following embodiments are examples for explaining the present invention, and the present invention shall not be limited to the following embodiments in any way.

### [Opened Carbon Fibre Bundle]

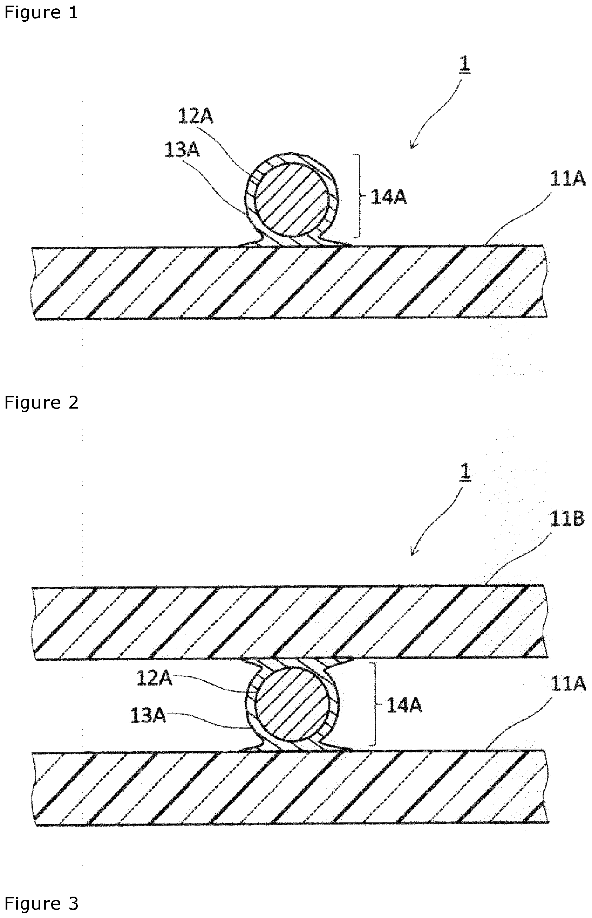

An opened carbon fibre bundle according to the present invention comprises a carbon fibre bundle composed of a plurality of carbon fibres and coated particles arranged between the carbon fibres. An opened carbon fibre bundle according to one embodiment of the present invention will be described with reference to a schematic diagram of FIG. 1. An opened carbon fibre bundle 1 is one in which a core particle 12A is integrally bonded to the surface of a carbon fibre 11A via a synthetic resin 13A. As shown in FIG. 1, a coated particle 14A has a structure in which the surface of the core particle 12A is coated with the synthetic resin 13A. The synthetic resin 13A which covers the core particle 12A bonds the core particle 12A and the carbon fibre 11A by wetting and spreading on the surface of the carbon fibre 11A, whereby the core particle 12A is integrally bonded to the surface of the carbon fibre 11A via the synthetic resin 13A. With such a structure, the core particle bonded to the carbon fibre surface will not fall out of the fibre bundle and the thermoplastic resin can be impregnated between the carbon fibres while maintaining the fibre-opening state, even when the carbon fibre bundle and the thermoplastic resin sheet are pressurized while being heated to impregnate the thermoplastic resin between the carbon fibres since the core particle 12A is firmly bonded to the surface of the carbon fibre 11A.

The core particle 12A constituting the coated particle 14A may be integrally bonded only to the surface of the carbon fibre 11A via the synthetic resin 13A, or may be integrally bonded to the surface of another carbon fibre 11B constituting the carbon fibre bundle via the synthetic resin 13A as shown in FIG. 2. With such a structure, the carbon fibres 11A and 11B are cross-linked by the coated particle 12A, and the thermoplastic resin can be impregnated between the carbon fibres while maintaining the fibre-opening state even more.

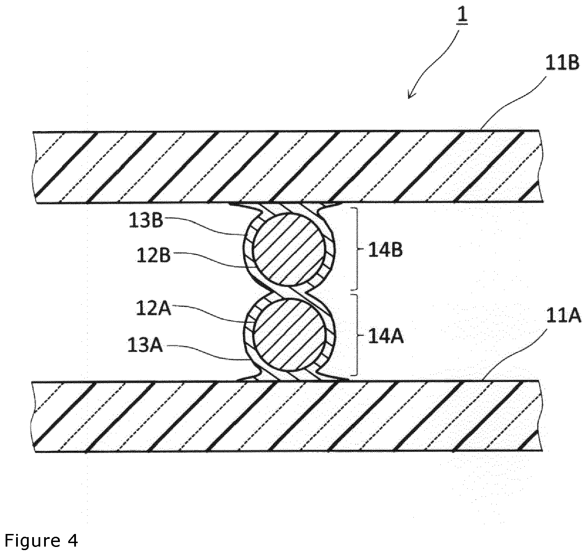

In the embodiment of the present invention, the carbon fibres 11A and 11B constituting the opened carbon fibre bundle 1 may be cross-linked by one coated particle 14A as described above; however as shown in FIG. 3, they may be cross-linked by two or more coated particles 14A and 14B.

The distance between the carbon fibres 11A and 12B becomes wider in the case where the carbon fibre bundle is opened by intervention of two or more coated particles as shown in FIG. 3, and thus the thermoplastic resin can be impregnated between the carbon fibres even more. Each of the core particle 12A and 12B constituting the coated particles 14A and 14B are respectively coated with synthetic resins 13A and 13B, and the core particles 12A and 12B are integrally bonded by synthetic resins 13A and 13B. In the followings, explanations will be provided of the carbon fibre constituting the carbon fibre bundle and the coated particle disposed between the carbon fibres.

### < Carbon Fibre >

Each carbon fibre is generally a single fibre, and a plurality of carbon fibres is assembled to form a carbon fibre bundle. The number of carbon fibres constituting each carbon fibre bundle is preferably 1000 to 50000 and preferably 2000 to 30000.

The carbon fibre bundle may be used in various forms. For example, it may be used in forms of unidirectional continuous fibres in which a plurality of fibre bundles is oriented in one direction, a woven fabric formed by weaving a plurality of fibre bundles, a knitted fabric formed by knitting fibre bundles, a nonwoven fabric formed by a plurality of fibre bundles, and the like. Among these, unidirectional continuous fibres and woven fabrics are preferred. The woven fabric may be woven by a plain weave, a twill weave, a satin weave or the like, and a plain weave is preferable. Preferred as the knitted fabric is a non-crimp fabric in which the fibres are arranged in a straight advancing direction in each fibre orientation direction.

Further, without particular limitation, a plurality of carbon fibre bundles is preferably in the form of a sheet. When the reinforcing fibre bundles are in a sheet form, the basis weight is preferably 100 to 400 g/m². When the basis weight of the reinforcing fibre bundles is 100 g/m² or more, the mechanical strength improves of the fibre reinforced composite material formed by using the opened carbon fibre bundle according to the present invention. When the basis weight of the reinforcing fibre is 400 g/m² or less, the matrix resin can be uniformly impregnated between the carbon fibres, and the mechanical strength of the fibre reinforced composite material improves. The basis weight is preferably 150 to 300 g/m².

### <Coated Particle>

The coated particle comprises a core particle and a synthetic resin coating for coating the surface of the core particle. The whole or a part of the surface of the core particle may be covered with the synthetic resin.

The coated particles are integrally bound to the surface of each carbon fibre constituting the carbon fibre bundle, and the coated particles function as spacers between the carbon fibres to open the carbon fibre bundle. The coated particles integrally bound to the surface of the carbon fibre may also be integrally bound to the surface of another carbon fibre to form a cross-link between the carbon fibres as described above. With the coated particles cross-linking between the carbon fibres and the coated particles intervening between the carbon fibres so as to cross-link the plurality of carbon fibres, the fibre-opening state of the fibre bundle can be maintained easier in a stronger manner. As a result, since the thermoplastic resin is easily impregnated into the carbon fibre bundle, it is possible to obtain a fibre reinforced composite material having a further improved mechanical strength, etc. Further, in the case where the carbon fibres are cross-linking with each other via the coated particles, the carbon fibres may be cross-linked with each other via two or more coated particles bonded to each other.

The core particle constituting the coated particle is not particularly limited as long as it does not deform or break by pressure and temperature at the time of impregnating the carbon fibre bundle with a thermoplastic resin, and for example, use can be made to inorganic particles, organic particles and the like. As the core particle, inorganic particles or organic particles may be used alone or the two in combination.

Examples of the inorganic particles include carbon particles, silica particles, alumina particles, titanium oxide particles, calcium carbonate particles, talc particles, and the like. Among them, carbon particles and silica particles are preferred because they are nearly spherical in shape. These inorganic particles may be used alone or two or more of these in combination.

When inorganic particles are used as the core particle, the surface of the core particle may be treated with a coupling agent having a functional group that reacts with an inorganic substance and a functional group that reacts with an organic functional group, in order to improve adhesion to a synthetic resin described later. As the coupling agent, known coupling agents such as titanate coupling agents, aluminate coupling agents, and silane coupling agents can be used without limitation. Examples of the organic group contained in the coupling agent include vinyl groups, epoxy groups, styryl groups, methacryloxy groups, acryloxy groups, amino groups, ureido groups, chloropropyl groups, mercapto groups, polysulfide groups, isocyanate groups, and the like.

As the organic particles, any resins of thermoplastic resins and thermosetting resins can be used as long as they do not deform or break by pressure and temperature at the time of impregnating the carbon fibre bundle with the thermoplastic resin, and it is preferable that the organic particles are resins having a high melting point and a high carbonization temperature. That is, the melting point and the carbonization temperature of the organic particles are preferably not less than the polymerization temperature of the monomer which is a raw material of the carbon allotrope constituting the coating film and the temperature at which the resin obtained by the polymerization of the monomer is carbonized to form the carbon allotrope, specifically, preferably not less than 150 °C, more preferably not less than 180 °C, and further preferably not less than 200 °C.

Examples of the resin constituting such organic particles include divinylbenzene cross-linked polymer, phenolic resin, polyamide resin, polyacrylic resin, acrylic-styrene copolymer, epoxy resin, polyacrylonitrile resin, benzoguanamine resin, polyester resin, polyurethane resin, and melamine resin, and preferred are divinylbenzene cross-linked polymer, phenolic resin, polyamide resin, polyacrylic resin, acrylic-styrene copolymer, and epoxy resin because the particles are not easily deformed when heated and pressurized, and divinylbenzene cross-linked polymer is more preferred from the viewpoint of affinity with amorphous carbon.

The average particle diameter of the core particles is preferably 1 to 25 µm, more preferably 2 to 20 µm, and further preferably 4 to 15 µm. By setting the average particle diameter of the core particles to be equal to or greater than these lower limits, the fibre bundle is sufficiently opened by the coated particles. In addition, by setting the value to be equal to or less than these upper limits, the coated particles can easily enter between the carbon fibres in each fibre bundle.

The average particle diameter of the organic particles is a value measured in the following manner. First, an enlarged photograph is taken of the opened carbon fibre bundle by 400 times, using an electron microscope. In the obtained photomicrograph, the diameters of 100 coated organic particles randomly selected are measured by dimension on the image, and the arithmetic average value thereof is determined as the average particle diameter of the coated organic particles. The particle diameter of the coated organic particles is a diameter of a perfect circle having a minimum diameter capable of surrounding the coated organic particles.

The synthetic resin constituting the coated particles may be any of the thermoplastic resins and curable resins, and a curable resin is preferably used from the viewpoint of heat resistance and mechanical strength when the matrix resin is impregnated by heating and pressing.

The curable resins are in a liquid state, a paste state, or a semi-solid state before curing, and those which can be solidified by curing may be used without particular limitation, and examples thereof include a solid resin from which the solvent is removed by heating and drying a resin solution which is a resin turned into a solvent, a resin of a solid polymer obtained by polymerizing a monomer or oligomer solution, and a resin of a solid polymer obtained by reaction of two or more monomers or oligomers.

From the viewpoint of maintaining the fibre-opening state of the carbon fibre bundle, the curable resin is preferably one which does not melt or deform under heating and pressurizing conditions when the carbon fibre bundle is impregnated with the thermoplastic resin. Such a resin preferably has a relatively high melting temperature or glass transition temperature, and for example, a thermosetting resin can be suitably used. Examples of the thermosetting resin include epoxy resins, urethane resins, silicone resins, phenol resins, vinyl ester resins, and naphthoxazine resins, and preferably used are epoxy resins or naphthoxazine resins from the viewpoint of mechanical strength after curing, and more preferably used are epoxy resins. The above-described thermosetting resin may be a one-part or a two-part type; however a two-part type thermosetting resin is preferable from the viewpoint of storage stability and handling properties.

As for the epoxy resins which is a two-part type curable resin, use can be made with the followings as the main agents: bisphenol type epoxy compounds such as bisphenol A type epoxy compounds, bisphenol F type epoxy compounds, bisphenol S type epoxy compounds, hydrogenated bisphenol A type epoxy compounds, dimer acid modified bisphenol A type epoxy compounds, for example, novolak type epoxy compounds such as phenol novolak type epoxy compounds and cresol novolak type epoxy compounds, aromatic epoxy compounds such as naphthalene type epoxy compounds and biphenyl type epoxy compounds, for example, dimer acid type epoxy compounds, for example, triepoxypropyl isocyanurate (triglycidyl isocyanurate), for example, nitrogen ring-containing epoxy compounds such as hydantoin epoxy compounds, for example, aliphatic epoxy compounds, for example alicyclic epoxy compounds such as dicyclo ring type epoxy compounds, for example, glycidyl ether type epoxy compounds, for example, glycidyl ester type epoxy compounds, for example, glycidyl amine type epoxy compounds, and the like.

As the curing agent for curing the main agent, amine compounds, imidazole compounds, amide compounds, cyano compounds, and the like can be used. Examples of the amine compound include ethylenediamine, propylenediamine, diethylenetriamine, triethylenetetramine, amine adducts thereof, metaphenylenediamine, diaminodiphenylmethane, diaminodiphenylsulfone, and the like. Examples of the imidazole compound include methylimidazole, 2-ethyl-4-methylimidazole, 1-isobutyl-2-methylimidazole, 1-benzyl-2-methylimidazole, 2-ethyl-4-methylimidazole, ethylimidazole, isopropylimidazole, 2,4-dimethylimidazole, phenylimidazole, undecylimidazole, heptadecylimidazole, 2-phenyl-4-methylimidazole, 2-phenyl-4,5-dihydroxymethylimidazole, and 2-phenyl-4-methyl-5-hydroxymethylimidazole. Examples of the amide compound include polyamide and the like. Examples of the cyano compound include dicyandiamide.

As for the urethane resins which is a two-part curable resin, the following main agents can be used, such as aromatic polyols such as bisphenol A, bisphenol F, phenol novolac, and cresol novolac; for example, alicyclic polyols such as cyclohexanediol, methylcyclohexanediol, isophorone diol, dicyclohexylmethane diol, and dimethyldicyclohexylmethane diol; for example, aliphatic polyols such as ethylene glycol, propylene glycol, butanediol, pentanediol, and hexanediol; for example, polymers obtained by dehydration condensation of polybasic acids and polyhydric alcohols; polymers obtained by ring-opening polymerization of lactones such as ε-caprolactone and α-methyl-ε-caprolactone; and polyester polyols such as hydroxycarboxylic acids and polyhydric alcohols, for example, polyether polyols.

As for a curing agent for curing the main agent, polyisocyanate compounds can be used. Examples of the polyisocyanate compound include aromatic polyisocyanates such as phenylene diisocyanate, tolylene diisocyanate, xylylene diisocyanate, diphenylmethane diisocyanate, dimethyldiphenyldimethane isocyanate, triphenylmethane triisocyanate, naphthalene diisocyanate, and polymethylene polyphenyl poliisocyanate; alicyclic polyisocyanates such as cyclohexylene diisocyanate, methylcyclohexylene diisocyanate, isophorone diisocyanate, dicyclohexylmethane diisocyanate, and dimethyldicyclohexylmethane diisocyanate; and aliphatic polyisocyanates such as methylene diisocyanate, ethylene diisocyanate, propylene diisocyanate, tetramethylene diisocyanate, and hexamethylene diisocyanate.

As for the silicone resins which is a two-part curable resin, organopolysiloxane having two or more alkenyl groups bound to silicon atoms per molecule can be used as a main agent. The main chain of the organopolysiloxane is generally composed of repeating diorganosiloxane units, but may also have a partially branched or cyclic structure. Examples of the alkenyl group contained in the organopolysiloxane include vinyl groups, allyl groups (2-propenyl groups), isopropenyl groups, 1-propenyl groups, butenyl groups, 1-methyl-2-propenyl groups, pentenyl groups, hexenyl groups, octenyl groups, cyclohexenyl groups.

Further, as a curing agent (cross-linking agent) for curing the main agent, organohydrogenpolysiloxane having at least two SiH groups can be used. Examples of the organohydrogenpolysiloxane include phenylmethylhydrogenpolysiloxane, 1,1,3,3-tetramethyldisiloxane, 1,3,5,7-tetramethylcyclotetrasiloxane, both terminal trimethylsiloxy groups-capped methyl hydrogen polysiloxane, both terminal trimethylsiloxy groups-capped dimethyl siloxane-methyl hydrogen siloxane copolymer, both terminal dimethylhydrogensiloxy groups-capped dimethylpolysiloxane, both terminal dimethyhydrogensiloxy groups-capped dimethyl siloxane-methylhydrogensiloxane copolymer, both terminal trimethyl siloxy groups-capped methylhydrogensiloxane-diphenylsiloxane copolymer, and both terminal trimethylsiloxy groups-capped methylhydrogen siloxane-diphenylsiloxane-dimethylsiloxane copolymer.

As for the phenolic resins which are a two-part type curable resin, the following main agents can be used such as novolak type phenols, biphenol type phenols, naphthalene type phenols, dicyclopentadiene type phenols, aralkyl type phenols, and dicyclopentadiene type phenols.

As the curing agent for curing the main agent, a formaldehyde supply source such as hexamethylene tetramine or paraformaldehyde can be used.

As for the vinyl ester resins which is a two-part curable resin, a vinyl ester can be used as a main agent. The vinyl ester may be an epoxy(meth)acrylate obtained by reacting an epoxy resin with an unsaturated monobasic acid such as acrylic acid or methacrylic acid. Examples of the epoxy resin include bisphenol A diglycidyl ether and a high molecular weight homologue thereof, novolac type polyglycidyl ether and a high molecular weight homologue thereof, and aliphatic glycidyl ethers such as 1,6 hexanediol diglycidyl ether.

The vinyl ester resins which are a two-part curable resin, may further contain a radical polymerizable unsaturated monomer as a main agent. Examples of the radical polymerizable unsaturated monomer include styrene monomers, α-, o-, m-, p-alkyl, nitro, cyano, amide, ester derivatives styrene, styrene monomers such as chlorostyrene, vinyl toluene, divinylbenzene, dienes such as butadiene, 2,3-dimethylbutadiene, isoprene, and chloroprene; (meth)acrylate esters such as ethyl(meth)acrylate, methyl(meth)acrylate, n-propyl(meth)acrylate, (meth)acrylate-i-propyl, hexyl(meth)acrylate, 2-ethylhexyl (meth)acrylate, lauryl(meth)acrylate, dodecyl(meth)acrylate, cyclopentyl(meth)acrylate, cyclohexyl(meth)acrylate, tetrahydrofuryl(meth)acrylate, acetoacetoxyethyl(meth)acrylate, dicyclopentenyloxyethyl(meth)acrylate, and phenoxyethyl(meth)acrylate; (meth)acrylamides such as amide(meth)acrylate and N, N-dimethylamide (meth)acrylate; vinyl compounds such as anilide(meth)acrylate; unsaturated dicarboxylic acid diesters such as diethyl citraconate; monomaleimide compounds such as N-phenylmaleimide and N-(meth) acryloylphthalimide.

As a curing agent for curing the main agent, use can be made to organic peroxides. Examples of the organic peroxide include ketone peroxide, perbenzoate, hydroperoxide, diacyl peroxide, peroxy ketal, hydroperoxide, diallyl peroxide, peroxy ester and peroxy dicarbonate.

When the synthetic resin is a thermoplastic resin, examples thereof include thermoplastic resins such as polyamide resins (Nylon 6, Nylon 66, Nylon 12, Nylon MXD6, polyolefin resins (low density polyethylene, high density polyethylene, polypropylene, modified polyolefin resins, polyester resins, polycarbonate resins, polyamide-imide resins, polyphenylene oxide resins, polysulfone resins, polyether sulfone resins, polyether ether ketone resins, polyether imide resins, polystyrene resins, ABS resins, polyphenylene sulfide resins, liquid crystal polyester resins, copolymers of acrylonitrile and styrene, and copolymers of Nylon 6 and Nylon 66.

Examples of the modified polyolefin resins include resins obtained by modifying polyolefin resins with acids such as maleic acid. One kind of the thermoplastic resins may be used alone, two or more kinds may be used in combination, and two or more kinds may be used as a polymer alloy. The thermoplastic resin preferably contains at least one resin selected from the group consisting of polyolefin resins, modified polypropylene resins, polyamide resins and polycarbonate resins, in view of each of the balance between the adhesive property to the carbon fibres, the impregnation property to the carbon fibres and the raw material cost of the thermoplastic resin. From the viewpoint of spinning properties, particularly preferred are polypropylene and polyamide.

### [Method for Manufacturing Opened Carbon Fibre Bundle]

The above-described opened carbon fibre bundle can be produced, for example, by the following method. That is, the above-described opened carbon fibre bundle can be produced by: (1) attaching an uncured curable resin to the core particles and covering at least a part of the core particles with the uncured curable resin; (2) contacting the core particles coated with the uncured curable resin to a carbon fibre bundle comprising a plurality of carbon fibres, and attaching the core particles to the carbon fibre surface via the uncured curable resin; and (3) curing the uncured curable resin to form coated particles such that the core particles are integrally bonded to the carbon fibre surface via the curable resin. Each step will be described below.

### < Step of Core Particle Coating >

First, an uncured curable resin is attached to the core particles. As the core particles, inorganic or organic particles as described above can be used. The uncured curable resin means a resin which is in a liquid state, a paste state, or a semi-solid state before curing and is solidified by curing, and the resin described above can be suitably used. The adhesion of the uncured curable resin to the core particles can be performed by immersing the core particles in the uncured curable resin or coating the core particles with the uncured curable resin. By attaching the uncured curable resin to the core particles, at least a part of the surface of the core particles can be covered with the uncured curable resin. In order to coat the entire surface of the core particles with the uncured curable resin, it is preferable to attach the uncured curable resin to the core particles by immersing the core particles in the uncured curable resin.

### < Step of Attaching Core Particle to Carbon Fibre Surface >

Next, the core particles coated with an uncured curable resin are brought into contact with a carbon fibre bundle composed of a plurality of carbon fibres, whereby the core particles are attached to the surface of the carbon fibres via the uncured curable resin. The means for bringing the core particles coated with the uncured curable resin into contact with the carbon fibre bundle is not particularly limited, and for example, mention can be made to a method by rotating or vibrating the carbon fibre bundle to which the core particles are attached. When the core particles coated with the uncured curable resin attach to the surface of the carbon fibre, the uncured curable resin also wet and spreads on the surface of the carbon fibre, and the gap between the core particles and the carbon fibre is filled with the uncured thermosetting resin, resulting in the state shown in FIGS. 1 to 3.

In the present invention, the above-described curable resin may be used as a sizing agent, and a carbon fibre bundle having the sizing agent attached to the surface of the carbon fibre in advance may be prepared, and the core particles may be brought into contact with the carbon fibre bundle having the sizing agent attached thereto.

With respect to the carbon fibre bundle to which the sizing agent is attached, a separate sizing agent may be attached to the carbon fibre bundle with no sizing agent attached, or commercially available carbon fibres with the sizing agent may be used as they are. Examples of the commercially available carbon fibres having a sizing agent include TC-33, TC-35, and TC-55 manufactured by Formosa Co., Ltd.

The amount of the sizing agent to be attached to the carbon fibre bundle is usually, without particular limitation, 0.01 to 10.0 mass %, preferably 0.1 to 7.0 mass %, more preferably 0.5 to 5.0 mass %, and further preferably 1.0 to 3.0 mass %.

When the amount of the sizing agent attached to the carbon fibre bundle is within the above range, the core particles can be attached to the carbon fibre, and the impregnation properties and the strength of interfacial adhesion of the matrix resin tend to improve.

In the case where the coated particles are obtained by bringing the core particles into contact with a carbon fibre bundle composed of carbon fibres having a sizing agent adhered to the surface, a solution in which the core particles are dispersed in an appropriate organic solvent may be brought into contact with the carbon fibre bundle, and the core particles may be integrally bonded to the carbon fibre surface via a curable resin.

The organic solvents are not particularly limited as long as they are known; however, preferred from the viewpoint of dispersing a carbon fibre bundle adhered by electrostatic interaction and impregnating inorganic particles into the inside of the fibre bundle, the organic solvents are alcohols having 1 to 10 carbons such as methanol, ethanol, propanol, isopropanol, n-butyl alcohol, and t-butyl alcohol; ketones having 1 to 6 carbons such as acetone, methyl ethyl ketone, and methyl isobutyl ketone; sulfoxides having 1 to 10 carbons such as dimethylformamide, dimethylacetamide, and dimethylsulfoxide; esters having 1 to 6 carbons such as ethyl acetate and n-butyl acetate; ethers having 1 to 10 carbons such as diethyl ether and tetrahydrofuran; halogenated hydrocarbons having 1 to 6 carbons such as methylene chloride and chloroform, more preferably, any one selected from methanol, ethanol, acetone, tetrahydrofuran, chloroform, dimethyl sulfoxide, and ethyl acetate that are capable of softening or dissolving the sizing agent, and further preferably methanol, ethanol, propanol, and acetone from the viewpoint of work environment for workers.

The organic solvent may be an aqueous solution containing an organic solvent component and water. In the case of an aqueous solution, water concentration contained in 100 mass % of the aqueous solution is usually 5 to 95 mass %, preferably 10 to 80 mass %, more preferably 20 to 70 mass %, further preferably 30 to 60 mass %, and most preferably 35 to 55 mass %.

When the water concentration in the organic solvent is not more than the upper limit, the sizing agent on the carbon fibre surface tends to be prevented from completely dissolving in the organic solvent, and when the water concentration is not less than the lower limit, the sizing agent softens and the inorganic particles tend to adhere to the carbon fibre surface.

The content of the organic solvent component and other components other than water in the organic solvent is usually 10 mass % or less, preferably 1 mass % or less, more preferably 0.1 mass % or less, and most preferably only the organic solvent component and water. Inevitable impurities contained in the organic solvent are also included in the organic solvent component (for example, residual substances in 99.9 % anhydrous ethanol).

In particular, when a monomer component as a polymerization raw material is contained, there is a risk that no adhesion occurs of the inorganic particles because of copolymerization with the sizing agent or coating by the other resins onto the sizing agent surface; therefore, it is preferable that no monomer component is contained in the organic solvent.

The content of the core particles contained in the solution is usually 0.1 parts by mass or more, preferably 1 part by mass or more, more preferably 2 parts by mass or more, further preferably 3 parts by mass, based on 100 parts by mass of the organic solvent, and on the other hand the upper limit is usually 50 parts by mass or less, preferably 30 parts by mass or less, and further preferably 10 parts by mass or less. When the content of the core particles contained in the solution is within the above range, the resin impregnation properties of the opened carbon fibre bundle improve, and the mechanical strength of the fibre reinforced composite material to be obtained tends to improve.

Adhesion of the core particles to the carbon fibre bundle is preferably performed such that the amount of the core particles is 0.1 to 5 parts by mass based on 100 parts by mass of the carbon fibre bundle, and more preferably 0.5 to 2 parts by mass. By adhering the core particles to the surface of the carbon fibres constituting the carbon fibre bundle within these ranges, the carbon fibre bundle can be opened more uniformly.

Examples of the method for attaching the core particles to the surface of the carbon fibres constituting the carbon fibre bundle include a method for preparing a solution in which core particles are added to the above-described curable resin composition and immersing the carbon fibre bundle in the solution, a method for applying or spraying the solution onto a carbon fibre bundle, and the like. When a carbon fibre bundle having a sizing agent attached to the surface of the carbon fibre is used, mention can be made to a method for preparing a solution containing core particles and an organic solvent as described above and immersing the carbon fibre bundle in the solution, a method for applying or spraying the solution onto a carbon fibre bundle, and the like. In either case, the method for immersing a carbon fibre bundle is preferably used from the viewpoint of dispersibility of the carbon fibre bundle.

Note that, a sieve or the like may be used to remove the core particles having a particle size that do not contribute to the opening between the carbon fibres. In the core particles, the frequency of particles having a diameter of 10 µm or more is preferably 5 % or less and more preferably 1 % or less on a volume basis. The frequency of particles of 1 µm or less in terms of volume is preferably 5 % or less and more preferably 1 % or less. When the frequency of the core particles in terms of volume is within the above ranges, particles which cannot enter the carbon fibre bundle or particles which do not contribute to opening are reduced, and therefore, the impregnation properties of the matrix resin and the physical properties of the fibre reinforced composite material to be obtained tend to improve.

### < Curing Step of Curable Resin >

Next, the uncured curable resin is cured. By curing the uncured curable resin with a state in which the core particles are adhering to the carbon fibre surface in the state as above, the coated particles are formed so that the core particles are integrally bonded to the carbon fibre surface via the curable resin. Since the coated particles firmly bond to the surface of the carbon fibre via the curable resin, the carbon fibres can maintain constant intervals without being closely attached to each other. As a result, the carbon fibre bundle can be retained in the opened state.

The method for curing the uncured curable resin depends on the curable resin to be used, and when use is made to a resin solution in which a resin is dissolved in a solvent, the resin can be cured by heating and drying, and when a resin cured by heat or active energy ray is used, the resin can be cured by irradiation with heat or active energy ray such as ultraviolet ray. In some two-part curable resins, curing reaction proceeds even at room temperature by mixing the main component and the curing agent, and in this case, curing may be carried out at room temperature.

The distance between the carbon fibres of the opened carbon fibre bundle obtained as described above is preferably at least partially 1 µm or more, preferably 3 µm or more, and more preferably 5 µm or more. When the distance between the carbon fibres is not less than the above range, the matrix resin tends to be easily impregnated to the center of the open fibre bundle by utilizing the voids between the fibres.

### [Fibre Reinforced Composite Material]

The fibre reinforced composite material of the present invention comprises the above-described opened carbon fibre bundle and a matrix resin impregnated in the opened carbon fibre bundle. The matrix resin may be either a thermosetting resin or a thermoplastic resin, and is preferably a thermoplastic resin from the viewpoint of imparting excellent flexural modulus and bending strength to the fibre reinforced composite material.

Examples of the thermoplastic resin include polyolefin resins, polyamide resins, acrylic resins, polyamide resins, and polycarbonate resins, and preferred are polyolefin resins having a good balance between viscosity and mechanical properties which affect impregnation between fibres.

Examples of the polyolefin resins include polyethylene resins and polypropylene resins.

Polyethylene resins are not particularly limited, and examples thereof include low density polyethylene resins, medium density polyethylene resins, high density polyethylene resins, linear low density polyethylene resins, linear medium density polyethylene resins, and linear high density polyethylene resins.

Polypropylene resins are not particularly limited, and examples thereof include propylene homopolymers and copolymers of propylene and another olefin. The copolymers of propylene and the other olefin may be either block copolymers or random copolymers.

Examples of the olefin to be copolymerized with propylene include a-olefins such as ethylene, 1-butene, 1-pentene, 4-methyl-1-pentene, 1-hexene, 1-octene, 1-nonene, and 1-decene.

Examples of the thermosetting resins include epoxy resins, unsaturated polyester resins, phenol resins, melamine resins, and polyurethane resins, and preferred are the unsaturated polyester resins and the epoxy resins.

The content of the opened carbon fibre bundle in the fibre reinforced composite material is preferably 10 to 70 mass % and more preferably 20 to 50 mass %. The content of the matrix resin in the fibre reinforced composite material is preferably 30 to 90 mass % and more preferably 50 to 70 mass %.

The method for impregnating the opened carbon fibre bundle with the matrix resin is not particularly limited. For example, mention can be made to a method in which a molten resin is extruded into a film form using a sheet die or the like, laminated on a fibre-opened carbon fibre bundle, and then compressed while being heated to impregnate the matrix resin into the opened carbon fibre bundle.

The opened carbon fibre bundle of the present invention is a fibre bundle sufficiently opened by the coated particles. Therefore, an appropriate amount of the matrix resin is impregnated into the opened carbon fibre bundle to make the resin impregnation properties better. Further, when the coated particles and the carbon fibres are connected and integrated, and the carbon fibres are cross-linked by the coated particles, the fibre-opening state of the carbon fibre bundle is maintained even if pressure, etc. is applied. Therefore, the fibre-opening state of the carbon fibre bundle is sufficiently maintained and the resin impregnation improves even when the matrix resin is impregnated with the carbon fibre bundle by applying heat and pressure. The fibre reinforced composite material has excellent mechanical strength when the matrix resin is impregnated appropriately and in a large amount.

### EXAMPLES

The present invention will be described in more details with reference to the following Examples; however the present invention shall not be limited to the following Examples.

### [Example 1A]

### < Preparation of Opened Carbon Fibre Bundle >

A solution was prepared by mixing a main agent of 1 mass % of an epoxy compound, a curing agent of 1 mass % of an amine compound, and a solvent of 98 mass % of acetone.

Next, silica particles (product name: "ESPHERIQUE 150N", manufactured by JGC C&C; average particle diameter: 6 µm; specific surface area: 190m²/g) were brought into contact with this solution for a few seconds, and then the silica particles were added to the surface of the carbon fibre bundles (product name: TC-35 12K, manufactured by Formosa Plastics, number of filaments: 12000).

Next, the carbon fibre bundle to which the silica particles were added was rotated and vibrated by bare hands for about 5 minutes to allow the silica particles to penetrate into the carbon fibre bundle. The carbon fibre bundle into which the silica particles had been penetrated was allowed to stand at room temperature for 24 hours to obtain an opened carbon fibre bundle.

The total adhesion amount of the silica particles and the two-part epoxy resin in the opened carbon fibre bundle was 1 mass %.

### < Preparation and Evaluation of Carbon Fibre Reinforced Composite >

A polypropylene (PP) resin (product name: "J108M", manufactured by Prime Polymer) was used as a matrix resin. The polypropylene resin was extruded into a film, and the polypropylene resin film in a molten state was laminated on a woven fabric consisted of the opened carbon fibre bundles obtained as described above, and subsequently, the resultant is compressed at a pressure of 1 MPa for 3 minutes while heating to 250 °C to impregnate the polypropylene resin into the opened carbon fibre bundle, thereby obtaining a carbon fibre reinforced composite having a thickness of 250 µm. The carbon fibre content in the carbon fibre reinforced composite was 50 mass %.

A plurality of the obtained carbon fibre reinforced composites were laminated and integrated by heat fusion to prepare a laminate. The bending strength of the obtained laminate was measured according to JIS K7074. The measurement result is as shown in Table 1 below.

### [Comparative Example 1A]

A carbon fibre reinforced composite was prepared in the same manner as in Example 1A, except that a carbon fibre bundle (product name: TC-35 12K, number of filaments: 12000, manufactured by Formosa Plastics) which had no fibre-opening treatment was used, and the bending strength was evaluated in the same manner. The measurement result is as shown in Table 1 below.

**[Table 1]**

| No. | Core Particles | Two-part type curable composition | | Bending strength (MPa) |
|---|---|---|---|---|
| | | Main agent | Curing agent | |
| Example 1A | Silica particles | Epoxy compound | Amine compound | 170 |
| Comparative Example 1A | - | - | - | 86 |

From the evaluation results shown in Table 1, it was found that the carbon fibre reinforced composite of Example 1A which was prepared by using the opened carbon fibre bundles had remarkably improved mechanical properties compared with those of the carbon fibre reinforced composite which was prepared by using opened carbon fibre bundles which had no fibre-opening treatment (Comparative Example 1A). This is considered to be because the impregnation properties of the polypropylene resin were improved by sufficient opening of the opened carbon fibre bundle with the coated particles.

### [Example 1B]

The following materials were used as raw materials.

### [Carbon Fibre Woven Fabric]

3K woven fabric: product name: "EC3C" manufactured by Formosa Plastics (PAN-based carbon fibre bundle; sizing material: epoxy resin; number of filaments: 3000; basis weight: 200 g/m²; thickness: 0.19 mm; plain weave)

### [Silica Particles]

Silica particles 1: product name: "ESPHERIQUE N15" (average particle diameter 6 µm; specific surface area 5 m²/g), manufactured by JGC C & C.

### [Resin Film]

PP1: a PP film formed by melt kneading 100 parts by weight of "J108M (product name)" (homopolypropylene resin) manufactured by Prime Polymer Co.; Ltd., and 10 parts by weight of "UMEX 1010" (acid-modified polypropylene) manufactured by SANYO CHEMICAL INDUSTRIES, LTD. in an extruder.
PVC1: a PVC film formed from a vinyl chloride resin (polymerization degree: 400) manufactured by Tokuyama Sekisui Co., Ltd.
PPS1: a polyphenylene sulfide resin film, manufactured by TORAY INDUSTRIES, INC., product name: "TORELINA" (50 µm-thick)
PEEK1: a polyetheretherketone resin film, manufactured by Shin-Etsu Polymer Co., Ltd., product name: "Shin-Etsu Sepia Film" (50 µm-thick)

60 parts by mass of ethanol and 40 parts by mass of distilled water were mixed to prepare ethanol water having an ethanol concentration of 40 mass %.

Next, 5 parts by mass of Silica Particles 1 were added to the ethanol water to prepare a fibre-opening impregnation liquid 1.

Thereafter, a 3K woven fabric was prepared, and fibre-opening impregnation liquid of 0.75 times the weight of the carbon fibre bundle was applied thereto. Thereafter, the obtained carbon fibre bundle was heated at 300°C for 2 minutes and dried.

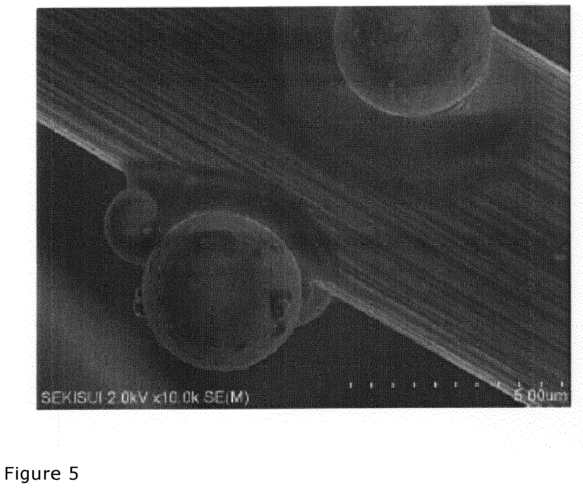

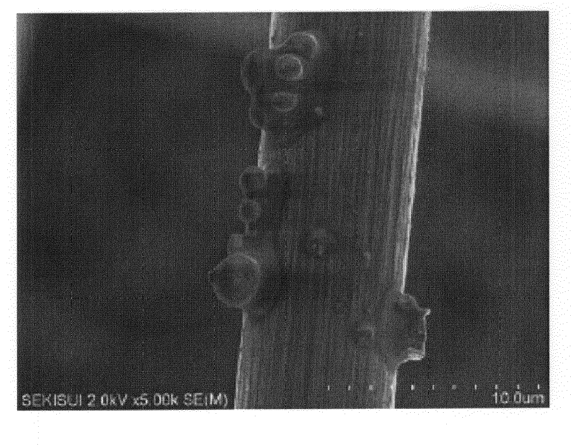

Enlarged photographs in which the opened carbon fibre bundles obtained by scanning electron microscopy were observed are shown in FIGs. 4 and 5. It can be seen that the silica particles are covered with the sizing agent and are attached to the fibre surface in the opened carbon fibre bundle obtained.

Both surfaces of the open fibre bundle thus obtained were laminated with a PP1 film and then compressed at a pressure of 2 MPa for 3 minutes while being heated to 200 °C so that the polypropylene resin was impregnated into the reinforcing fibre bundle, whereby a carbon fibre reinforced composite material (prepreg) was obtained having a thickness of 250 µm and a carbon fibre content (volume %) of 50 % in the fibre reinforced composite.

### <Bending Strength>

A plurality of the above-described carbon fibre reinforced composite materials were stacked and integrated by heat fusion to prepare a test piece. The bending strength of the obtained test piece was measured according to JIS K7074. The result is shown in Table 2.

### [Comparative Example 1B]

Fibre-opening treatment and impregnation with a matrix resin were performed in the same manner as in Example 1B, except that the fibre-opening impregnation liquid was changed to a fibre-opening impregnation liquid in which Silica Particles 1 were mixed with 100 parts by weight of water, and the bending strength of the resulting carbon fibre reinforced composite material was evaluated. The result is shown in Table 2.

### [Example 2B]

A carbon fibre reinforced composite material was prepared in the same manner as in Example 1B, except that the matrix resin of Example 1B was changed from PP1 to PVC1, and the bending strength was evaluated. The result is shown in Table 2.

### [Comparative Example 2B]

A carbon fibre reinforced composite material was prepared in the same manner as in Comparative Example 1B, except that the matrix resin of Comparative Example 1B was changed from PP1 to PVC1, and the bending strength was evaluated. The result is shown in Table 2.

### [Example 3B]

A carbon fibre reinforced composite material was prepared in the same manner as in Example 1B, except that the matrix resin of Example 1B was changed from PP1 to PPS1, and the bending strength was evaluated. The result is shown in Table 2.

### [Example 3B]

A carbon fibre reinforced composite material was produced in the same manner as in Example 1B, except that the matrix resin of Example 1B was changed from PP1 to PPS1 and ethanol was changed to acetone, and the bending strength was evaluated. The result is shown in Table 2.

### [Comparative Example 3B]

A carbon fibre reinforced composite material was produced in the same manner as in Example 1B, except that the matrix resin of Example 1B was changed from PP1 to PPS1 and the fibre-opening impregnation liquid consisted of only 100 parts by weight of water, and the bending strength was evaluated. The result is shown in Table 2.

### [Example 4B]

A carbon fibre reinforced composite material was produced in the same manner as in Example 1B, except that the matrix resin of Example 1B was changed from PP1 to PEEK1, and the bending strength was evaluated. The result is shown in Table 2.

### [Example 5B]

A carbon fibre reinforced composite material was produced in the same manner as in Example 1B, except that the matrix resin was changed from PP1 to PEEK1 and ethanol was changed to acetone, and the bending strength was evaluated. The result is shown in Table 2.

### [Comparative Example 4B]

A carbon fibre reinforced composite material was produced in the same manner as in Example 1B, except that the matrix resin was changed from PP1 to PEEK1 and the fibre-opening impregnation liquid consisted of only 100 parts by weight of water, and the bending strength was evaluated. The result is shown in Table 2.

**[Table 2]**

| | Carbon Fibre Bundle | Matrix Resin | Opened fibre solution composition (parts by weight) | Silica Particles (parts by weight) | Bending Strength (MPa) |
|---|---|---|---|---|---|
| Ex.1B | 3K woven fabric | PP1 | EtOH 60: water 40 | 5 | 349 |
| Comp. Ex. 1B | 3K woven fabric | PP1 | Water 100 | 5 | 309 |
| Ex. 2B | 3K woven fabric | PVC1 | EtOH 60: water 40 | 5 | 487 |
| Comp. Ex. 2B | 3K woven fabric | PVC1 | Water 100 | 5 | 401 |
| Ex. 3B | 3K woven fabric | PPS1 | EtOH 60: water 40 | 5 | 896 |
| Ex. 4B | 3K woven fabric | PPS1 | ACT 60: water 40 | 5 | 803 |
| Comp. Ex. 3B | 3K woven fabric | PPS1 | Water 100 | 0 | 343 |
| Comp. Ex. 4B | 3K woven fabric | PEEK1 | EtOH 60: water 40 | 5 | 889 |
| Ex. 5B | 3K woven fabric | PEEK1 | ACT 60: water 40 | 5 | 659 |
| Comp. Ex. 4B | 3K woven fabric | PEEK 1 | Water 100 | 0 | 203 |

According to the above evaluation results, the opened carbon fibre bundle in which the carbon fibre bundle having the sizing agent (epoxy resin) attached thereto that was brought into contact with the fibre opening solution containing only water and silica particles, did not have the silica particles integrally bonded to the surface of the carbon fibre via the sizing agent. Therefore, the fibre-opened carbon fibre bundle was not sufficiently opened, having an insufficient impregnation portion and the bending strength of the fibre-reinforced resin composite was insufficient.

On the other hand, as shown in FIGS. 4 and 5, the opened carbon fibre bundle in which the carbon fibre to which the epoxy sizing agent was attached was brought into contact with the fibre-opening liquid containing ethanol water and the silica particles had the silica particles integrally bonded via the sizing agent. As a result, it was found that the opened carbon fibre bundle was opened sufficiently, and the bending strength of the fibre-reinforced resin composite material obtained greatly improved.

### [Example 6B]

From the evaluation results of Examples 1B to 5B and Comparative Examples 1B to 4B, it is understood that in order to integrally bond the core particles and the coated particles composed of the curable resin coating so as to cover at least a part of the surface of the core particles to the carbon fibre surface, it is also important to bring the coated particles into contact with an organic solvent which softens or dissolves the sizing agent attached to the carbon fibres. In order to verify the experimental results in more details, a dissolution experiment was carried out in which an epoxy resin, which is a typical sizing agent, was immersed in various solvents.

An ampule bottle was prepared containing 10 g each of hexane, toluene, ethyl acetate, acetonitrile, dimethyl sulfoxide, acetic acid, 1-propanol, and ethanol as organic solvents.

Next, 0.1 g of an epoxy resin (manufactured by Mitsubishi Chemical Corporation; product name: jER Basic Solid Type 1004) was immersed in an ampule bottle containing 10 g of the above organic solvent, allowed to stand at room temperature for 24 hours, and the contents were visually inspected.

As a result, no solid substance was found in the ampule bottle containing ethyl acetate, acetonitrile, dimethyl sulfoxide, and acetic acid. In addition, although a solid substance was confirmed in the ampule bottle to which toluene, 1-propanol, and ethanol were added, the shape was greatly changed. There was no change in the solid substance in the ampule bottle containing hexane before and after the immersion.

Therefore, it is considered that a solvent containing ethyl acetate, acetonitrile, dimethyl sulfoxide, acetic acid, toluene, 1-propanol, and ethanol can dissolve or soften the epoxy resin which is the sizing agent, and thus an opened carbon fibre bundle was obtained in which the core particles of the above-described coated particles are integrally bonded to the carbon fibre surface via the curable resin.

### [Example 7B]

### < Preparation of Fibre-opening impregnation liquid >

A monomer containing 10 parts by mass of 1,5-dihydroxynaphthalene (product name: "048-02342", manufactured by Wako Pure Chemical Industries, Ltd.), 4 parts by mass of methylamine (product name: "132-01857", manufactured by Wako Pure Chemical Industries, Ltd.), and 8 parts by mass of formalin (formaldehyde content: 37 mass %, product name: "064-00406", manufactured by Wako Pure Chemical Industries, Ltd.), and 600 parts by mass of ethanol water as a solvent (ethanol content: 50 mass %, product name: "057-00456", manufactured by Wako Pure Chemical Industries, Ltd.) were uniformly mixed to prepare a naphthoxazine resin solution.

Then, 5 parts by weight of Silica Particles 1 were added to the above-described naphthoxazine resin solution to prepare a fibre-opening impregnation liquid 1.

Thereafter, a 3K woven fabric was prepared, and the fibre-opening impregnation liquid of 0.75 times the weight of the carbon fibres bundle was applied thereto. Thereafter, the obtained carbon fibre bundle was heated at 130 °C for 2 minutes to obtain an opened fibre bundle in which the naphthoxazine resin has polymerized.

Both surfaces of the opened fibre bundle thus obtained were laminated with a PPS1 film and then compressed at a pressure of 2 MPa for 3 minutes while being heated to 200 °C so that the polyphenylene sulfide resin was impregnated into the reinforcing fibre bundle to obtain a carbon fibre reinforced composite material (prepreg) having a thickness of 250 µm and a carbon fibre content (volume %) of 50 % in the fibre reinforced composite.

### < Bending Strength >

A plurality of the above-described carbon fibre reinforced composite materials were stacked and integrated by heat fusion to produce a test piece. The bending strength of the obtained test piece was measured according to JIS K7074. The result is shown in Table 3.

### [Example 8B]

A carbon fibre reinforced composite material was produced in the same manner as in Example 7B, except that the matrix resin of Example 7B was changed from PPS1 to PEEK1, and the bending strength was evaluated. The result is shown in Table 3.

**[Table 3]**

| | Carbon fibre bundle | matrix resin | synthetic resin | Silica particles (parts by weight) | Bending strength (MPa) |
|---|---|---|---|---|---|
| Example 7B | 3K woven fabric | PPS1 | Naphthoxazine | 5 | 810 |
| Comparative Example 3B | 3K woven fabric | PPS1 | - | 0 | 343 |
| Example 8B | 3K woven fabric | PEEK1 | Naphthoxazine | 5 | 791 |
| Comparative Example 4B | 3K woven | PEEK1 | - | 0 | 203 |
| | fabric | | | | |

From the above evaluation results, it is considered that the bending strength of the fibre reinforced composite material improves since the opened carbon fibre bundle to which the silica particles are attached via the naphthoxazine resin, which is a synthetic resin, has excellent thermoplastic resin impregnation properties as compared with the unopened carbon fibre bundle.

Although the present invention has been described by way of example and not by way of limitation, in accordance with the preferred embodiment of the present invention, it should be understood that modifications and/or corrections may be made by those skilled in the art without departing from the scope of invention as defined by the appended claims.

## Claims

1. An opened carbon fibre bundle comprising a carbon fibre bundle comprising a plurality of carbon fibres and coated particles arranged between the carbon fibres, wherein
the coated particles comprise core particles and a synthetic resin coating that covers at least a part of the surface of the core particles, and
the core particles are integrally bonded to the carbon fibre surface via the synthetic resin coating.

2. The opened carbon fibre bundle according to claim 1, wherein
the core particles comprise at least one selected from the group consisting of carbon particles, silica particles, alumina particles, titanium oxide particles, calcium carbonate particles, talc particles, and divinylbenzene resin particles.

3. The opened carbon fibre bundle according to claim 1 or 2, wherein
the synthetic resin comprises at least one curable resin selected from the group consisting of epoxy resins, urethane resins, silicone resins, phenol resins, and vinyl ester resins.

4. The opened carbon fibre bundle according to any one of claims 1 to 3, wherein
at least one of the coated particles is bonded to two or more carbon fibres.

5. The opened carbon fibre bundle according to any one of claims 1 to 4, wherein
the average particle diameter of the core particles is 1 to 25 µm.

6. A fibre reinforced composite material comprising the opened carbon fibre bundle according to any one of claims 1 to 5 and a matrix resin impregnated in the opened carbon fibre bundle.

7. The fibre reinforced composite material according to claim 6, wherein
the matrix resin is a thermoplastic resin.

8. A method for manufacturing an opened carbon fibre bundle, comprising the steps of:
attaching an uncured curable resin to core particles and covering at least a part of the surface of the core particles with the uncured curable resin;
bringing the core particles coated with the uncured curable resin into contact with a carbon fibre bundle comprising a plurality of carbon fibres to attach the core particles to the surface of the carbon fibres via the uncured curable resin; and
curing the uncured curable resin to form the coated particles so that the core particles are integrally bonded to the carbon fibre surface via the curable resin.

9. The method according to claim 8, wherein
the curing of the curable resin is performed by at least one selected from the group consisting of room temperature curing, heat curing, and active energy ray curing.

10. The method according to claim 8 or 9, wherein
the curable resin is a two-part curable resin comprising a main agent and a curing agent.
